# EUROPÄISCHE PATENTANMELDUNG

(11) **EP 1 978 046 A2**
(43) Veröffentlichungstag der Anmeldung: **08.10.2008**
(21) Anmeldenummer: 08004352.4
(22) Anmeldetag: 10.03.2008
(51) Int. Cl.: C08G 18/00, C08G 77/00

(54) **Schaumbildende, sich verfestigende Zusammensetzungen zur Abformung von Oberflächen und dafür geeignete Abformlöffel**

(30) Priorität: 05.04.2007 DE 102007016791
(71) Anmelder: Heraeus Kulzer GmbH, 63450 Hanau (DE)
(72) Erfinder: Grunwald, Martin Dr., 50259 Pulheim (DE); Knispel, Gottfried Dr., 51375 Leverkusen (DE); Grundler, Andreas Dr., 41542 Dormagen (DE)
(74) Vertreter: Kühn, Hans-Christian

(57) **Zusammenfassung**

Schaumbildende, sich verfestigende Zusammensetzungen zur Abformung biologischer Oberflächen
enthalten
**A** mindestens ein Abformmaterial auf Basis von
**i**
Isocyanaten, die mit ein- und mehrfunktionellen Aminen und/oder hydroxylgruppenhaltigen Verbindungen zu Urethan oder Harnstoff abreagieren, oder
**ii**
A-Silikonen oder
**iii**
C-Silikonen oder
**iv**
Polyethern oder
**v**
alpha-Silanen oder
**vi**
Mischungen zweier oder mehrerer Materialien **i** bis **v**, sowie
gegebenenfalls **B**
mindestens ein Treibmittel. Abformungen biologischer Oberflächen daraus weisen einen geschlossenporigen Schaum auf.

## Beschreibung

Die Erfindung betrifft schaumbildende, sich verfestigende Zusammensetzungen zur Abformung von Oberflächen sowie dafür geeignete Abformlöffel.

Irreversibel plastische Abformmaterialien wie Alginate, Polysulfide, C- oder A- Silikone, oder Polyether basieren auf zwei Komponenten, die vor der Abformung aufwendig entweder per Hand oder mit Hilfe von statischen oder dynamischen hand- bzw. elektrisch angetriebenen Mischsystemen, wie Sie derzeit z.B. im Bereich der Dentaltechnik verwendet werden, homogenisiert und dabei zur Reaktion gebracht werden müssen.

### Stand der Technik

In DE19505896A1 geht es um eine leicht anmischbare Abformmasse mit hoher Zeichnungsschärfe. Erwünscht ist danach die Konsistenz von Schlagsahne, d.h. die Masse soll sich leicht verformen lassen und dennoch standfest sein. DE19505896A1 schlägt dazu die Ausbildung eines mikrofeinen Kristallgeflechts in den Pasten vor. Diese sind blasenfrei.

Geschäumte oder Treibmittel enthaltende Silikonmassen sind an sich bekannt:

DE3210094 betrifft die Ausbildung *in situ* von Mikrohohlkugeln in Silikon Abformmassen mittels Treibmitteln.

Aus DE4029888A1 sind potentiell als Abformmassen geeignete Reaktivsysteme zur Herstellung von Polyurethanen bekannt, die gegebenenfalls geschäumt vorliegen können. Allerdings wird eine Verbindung zwischen Abformung und Schaum dort nicht hergestellt. Ob die geschäumte Variante als Abformmaterial empfohlen wird oder geeignet ist, bleibt offen.

DE10100736C2 betrifft ein Trennmittel auf Organosilikonbasis, bei dem mittels Treibgas Schaumblasen erzeugt werden. Es handelt sich dabei nicht um ein Abformmaterial.

US4677139 betrifft eine Schaumzusammensetzung für den Dentalbereich, z.B. als Wundverband oder Druckverband oder insbesondere zur temporären Beabstandung des Zahnfleischs vom Zahn, etwa zur Erleichterung der Abdrucknahme oder bei Zahnfleischoperationen.

Zudem gibt es das Produkt Magic Foamcord der Fa. Coltene/Whaledent Inc., ein Material welches zur Sulkuserweiterung dient, aber nicht für Abformungen eingesetzt wird und auch kein Treibmittel enthält (EP1603480A1).

Bei diesem Produkt wird die in Kontakt stehende Oberfläche (der Sulkus) durch das sich expandierende Material erweitert. Diese Eigenschaft steht in Abgrenzung zu einem Schaum zur Abformung von Oberflächen, da dieser die Oberflächenstruktur nicht verändern darf; andernfalls würde die Abformgenauigkeit leiden. Zudem expandiert das Produkt Magic Foamcord im Gegensatz zur vorliegenden Erfindung erst durch Reaktion mit Wasser, oder Luftfeuchtigkeit und erweitert dabei schaumartig sein Lumen.

In DE10108038C1 **und -9C1** werden isocyanatfreie schäumbare Mischungen mit Treibmittel beschrieben. Die Anwendung beschränkt sich auf die Herstellung von industriellen Sprayschäumen am Bau und zur Geräteisolierung. Das ungiftige Material wird insbesondere zur Minimierung des Risikos bei Privatanwendern empfohlen.

Der vorliegenden Erfindung liegt die Aufgabe zugrunde, eine Zusammensetzung zur Verfügung zu stellen, bei deren Anwendung auf hand- und/oder elektrisch angetriebene Mischsysteme verzichtet werden kann und die potentiell zusätzlich eine Schaumstruktur bildet.

### Beschreibung der Erfindung

Die vorliegende Erfindung betrifft eine schaumbildende, sich selbsttragend verfestigende Zusammensetzung zur Abformung biologischer Oberflächen gemäß Anspruch1 , insbesondere eine Dentalzusammensetzung,
bevorzugt enthaltend ein Treibmittel, auf Basis von Isocyanaten, die z.B. mit ein- und mehrfunktionellen Aminen und/oder Hydroxylgruppenhaltigen Verbindungen zu Urethan oder Harnstoff abreagieren, oder A-Silikonen, oder C-Silikonen oder Polyethern, oder einem oder mehreren alpha-Silanen oder Mischungen daraus.

Vorteilhafte Ausgestaltungen sind den Unteransprüchen zu entnehmen.

Die Erfindung betrifft auch eine Abformung biologischer Oberflächen aus einem derartigen Abformmaterial, insbesondere eine humane Abformung wie zB eine Dentalabformung, die einen geschlossenporigen Schaum aufweist.

Besonders geeignet sind Materialien basierend auf einem Tri-, Di- oder Monoalkoxy-alpha-Silan (z.B. einem alpha-Amino-Trimethoxy-Silan).

Die bevorzugt eingesetzten alpha-Silane sind z.B. von der Firma Wacker erhältlich. Sie werden z.Z. in Bauschäumen eingesetzt, wo sie zur Befestigung z.B. von Türelementen und Isolierung dienen. Die Schäume weisen im Vergleich zu klassischen Isocyanat-basierten Schäumen stark verringerte Toxizitäten auf.

Vorteile des erfindungsgemäßen, sich verfestigenden Schaums sind:
- Das Material weist eine geringe Dichte auf und bietet daher bei Applikation über einen Löffel wenig Einsetzwiderstand.
- Bei Verwendung von alpha-Silanen ist im Vergleich zu den in Schäumen klassischerweise verwendeten Isocyanaten das Toxizitätspotential (bei dennoch hoher Reaktivität) gering.
- In einer Ausführung mit einem hohen Treibgasanteil im Schaum kann der Schaumdruck, der durch das sich während der Abformung im Abformmaterial expandierende Treibmittel erzeugt wird, zur verbesserten Oberflächenanpassung führen - er füllt Hohlräume und Lumen selbständig aus und ermöglicht somit eine drucklose Abformtechnik. Die Abformung ist dadurch verzerrungsfrei und die abzuformende Oberfläche wird vollständig ausgeflossen.
- In einer Ausführungsform mit einem hohen Treibgasanteil im Schaum kann es besonders vorteilhaft sein, wenn das Material zusammen mit einem speziellen Abformlöffel bereitgestellt wird, der einen Einlass für z. B. aus einer Sprühdose austretenden Schaum aufweist, die seitlichen Flächen abdichtet und mindestens einen Auslass für überschüssigen Schaum aufweist, derart, dass ein Schaumüberschuss nicht in den Rachenraum gelangt. Die Erfindung betrifft demgemäß auch einen so ausgestalteten Abformlöffel.
- In einer anderen Ausführung ist es auch möglich, direkt aus einem erfindungsgemäßen Schaum einen individuellen Abformlöffel herzustellen. Bei einer ausreichend hohen Endhärte und hohem E-Modul des sich verfestigenden Schaumes stellt dieser nach dem Trennen von der abzuformenden Oberfläche einen steifen Körper dar, der die Basis für eine zweite Abformung nach einem Korrekturverfahren darstellt. Die Erstabformung erfüllt dann den gleichen Zweck wie ein individueller Abformlöffel.
- Es kann auch zweckmäßig sein, einen erfindungsgemäßen Schaum mit hoher Rohdichte (< 50% Gasvolumen im verfestigten Schaum) für eine Korrekturabformung vorzusehen. Die hohe Rohdichte lässt sich durch z.B. durch einen geringen Gehalt an Treibmittel erreichen erreichen.
- Selbstverständlich kann der erfindungsgemäße Schaum in geeigneter Ausführung auch zur Herstellung einer Situationsabformung verwendet werden.
- Ebenso ist es möglich, mit einer geeigneten Viskosität und entsprechendem enthaltenem Treibgasgehalt den Einsatz des erfindungsgemäßen Schaums zur Erweiterung des Sulkus bzw. als eine Art expandierendem Extraktionsfaden vorzusehen.
- Möglich sind auch der Einsatz als Platzhalter auf Zahnstümpfen, zur Schienung von Zähnen, sowie zur Herstellung von individuellem Mundschutz im Sportbereich ("mouth gard").
- Aufgrund der dosiert einstellbaren Expansionseigenschaften der Anmischung ist auch die Verwendung z.B. zur Abformung von anderen als dentalen Körperoberflächen und Innenflächen sehr vorteilhaft - so z.B. die Verwendung als Abformmaterial für Ohrabformungen.
- Die Schaumbildung wird zweckmäßig durch Applikation aus Druckdosen ausgelöst.
- Als Schaumbildner kann das Treibgas dienen, z.B Stickstoff oder Kohlensäure, niedermolekulare Kohlenwasserstoffe wie Pentan, Butan, Propan oder deren Mischungen oder auch gasbildende Chemikalien, wie z. B. an Natriumbicarbonat mit Zitronensäure.

### Beschreibung der Figuren

Fig. 1 zeigt einen erfindungsgemäß modifizierten Abformlöffel.
Fig. 2 zeigt einen erfindungsgemäß modifizierten Abformlöffel, der optional mit einer stärkeren Abdämmung zum Rachen versehen ist.
Fig. 3a und b zeigen die Anwendungsform in 2-Kammer-Druckpatronen mit dem entsprechenden Abformlöffel.
Fig. 4a und b zeigen die Anwendungsform in 2-Kammer-Druckpatronen mit verschiedenen Treibmittel-Anteilen.

Der erfindungsgemäße Abformlöffel weist Kanäle 1 für den Zu- und Abfluss des Schaums auf. Ferner ist die zirkuläre Abdämmung 2 zur Dichtung des Übergangs Löffel/Zahnfleisch zu erkennen.

In einer weiteren Ausführungsform kann der Abformlöffel zum Rachen in mit einer stärkeren Abdämmung 3 versehen sein.

Als Materialien für den erfindungsgemäßen Schaum sind z.B. Systeme auf Isocyanat-Basis geeignet, die z.B. mit ein- und mehrfunktionellen Aminen und/oder hydroxylgruppenhaltigen Verbindungen zu Urethan oder Harnstoff abreagieren, ferner A- oder C-Silikone und Polyether oder Mischungen daraus.
Besonders geeignet sind Materialien basierend auf einem Tri-, Di- oder Monoalkoxy-α-Silan (z.B. einem α-Amino-Trimethoxy-Silan).

Die bevorzugt eingesetzten alpha-Silane sind z. B. von der Firma Wacker erhältlich. Sie werden z.Z. in Bauschäumen eingesetzt, wo sie zur Befestigung z.B. von Türelementen und Isolierung dienen. Die Schäume weisen im Vergleich zu klassischen Isocyanat basierten Schäumen stark verringerte Toxizitäten auf.

Die Ausbildung eines Schaumes kann durch die Wahl eines geeigneten Primärpackmittels erfolgen, welches z.B. in der Mischvorrichtung Gase in das Abformmaterial einträgt, die nach dem Verlassen der Mischvorrichtung dem Material eine schaumartige Struktur geben.

Bevorzugt werden Schaumbildner wie z.B. Stickstoff oder Kohlensäure, niedermolekulare Kohlenwasserstoffe wie Pentan, Butan, Propan oder deren Mischungen oder auch gasbildende Chemikalien, wie zB. and Natriumbicarbonat mit Zitronensäure eingesetzt, die entweder der Basis-, oder der Katalysatorkomponente, oder beiden Komponenten direkt zugesetzt werden.

Möglich ist zudem die Trennung von Treibmittel und Schaumbildner in Mehrkammerbehältern, wodurch sich die Materialeigenschaften fein dosiert auf den Anwendungszweck einstellen lassen.

Besonders bevorzugte Ausgestaltungen der Erfindung gehen aus den folgenden Beispielen hervor:

### Beispiel 1

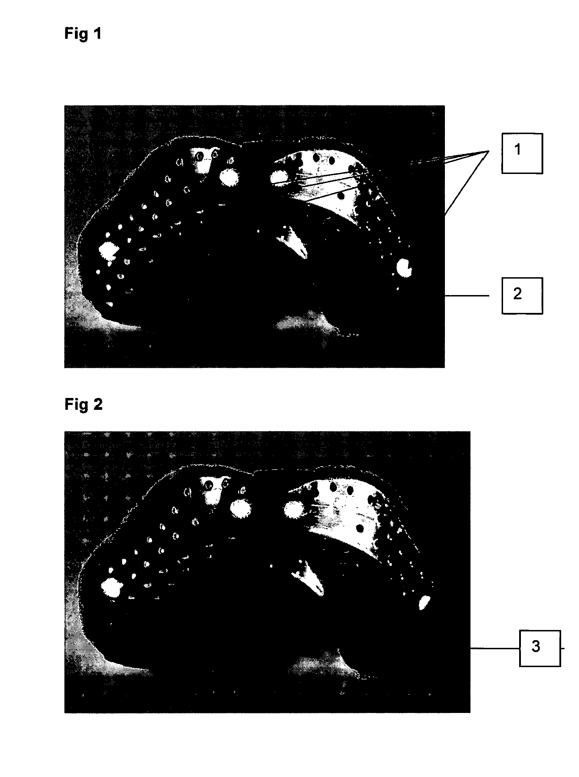

Ein Abformmaterial bestehend aus
a) einer Basispaste eines A-Silikon Abformmaterials in typischer im Markt verwendeter Zusammensetzung, in diesem Fall des Handelsproduktes Flexitime Correct Flow¹ (Charge 250327) der Firma Heraeus Kulzer GmbH und
b) einer Katalysatorpaste des Handelsproduktes Flexitime Correct Flow (Charge 250334),
wird in 2-Kammer-Druckgaspatronen abgefüllt. Als Treibmittel dient in diesem Fall Pentan (siehe Abbildung 2a). Die Applikation geschieht dabei z.B. durch handelsübliche Applikatoren (Abbildung 2b) unter Verwendung von handelsüblichen statischen Mischern.
¹Bei dem Abformmaterial **Flexitime** handelt es sich um ein zweiphasiges additionsvernetzendes Polyvinylsiloxan (siehe 3.3.).Es besteht aus einer hochviskösen (**Heavy-Tray**) und einer niedrigviskösen (**Correct Flow**) Phase. Bei der **Heavy-Tray**-Phase werden Basis- und Reaktorpaste im sog. **Pentamixgerät** angerührt. Die **Correct-Flow-**Phase wird mittels Mischkanüle und Dispenser vermischt und manuell appliziert. Die Abbindezeit der Phasen beträgt 3,5-5 Minuten. Bei additionsvernetzende Silikonen (A-Silikonen) enthält die Basiskomponente lineare Ketten mit endständigen Vinylgruppen. Die Reaktorkomponente besteht aus Organohydrogensiloxanen. Als Katalysator fungieren organische Platinverbindungen. Bei einer Durchmischung beider Komponenten bilden sich Äthylbrücken, wobei keine niedermolekularen, flüchtigen Stoffe entstehen (Polyaddition).

Dabei ist die Förderzeit des Abformmaterials gegenüber jener aus einer handbetriebenen Abformpistole, in die eine 50 ml Hartkartusche eingelegt wird, stark reduziert. Die Applikation des Abformmaterials kann aufgrund dessen, dass die Mischdüse nicht durch Pumpbewegungen der Hand hin- und herwackelt, erheblich dosierter und platzierter erfolgen.
Das sich bildende Silikon weist gegenüber dem klassisch aus einer Hartkartusche geförderten Material und mittels statischem Mischer gemischten Handelsware überraschenderweise eine Schaumstruktur auf. Die Shore A Härte ist dadurch um ca. 10 Einheiten auf 36 Einheiten reduziert (Messung 10 min nach Mischbeginn). Die Verarbeitungs- und Abbindezeit dieses A-Silikons sind jenen der Handelware ähnlich. Die Poren im abgebundenen Abformmaterial befinden sich dabei nahezu vollständig innerhalb des ausgehärteten Materials, während an der abgeformten Oberfläche eine nahezu blasenfreie und sehr homogene Oberfläche entsteht.

### Beispiel 2

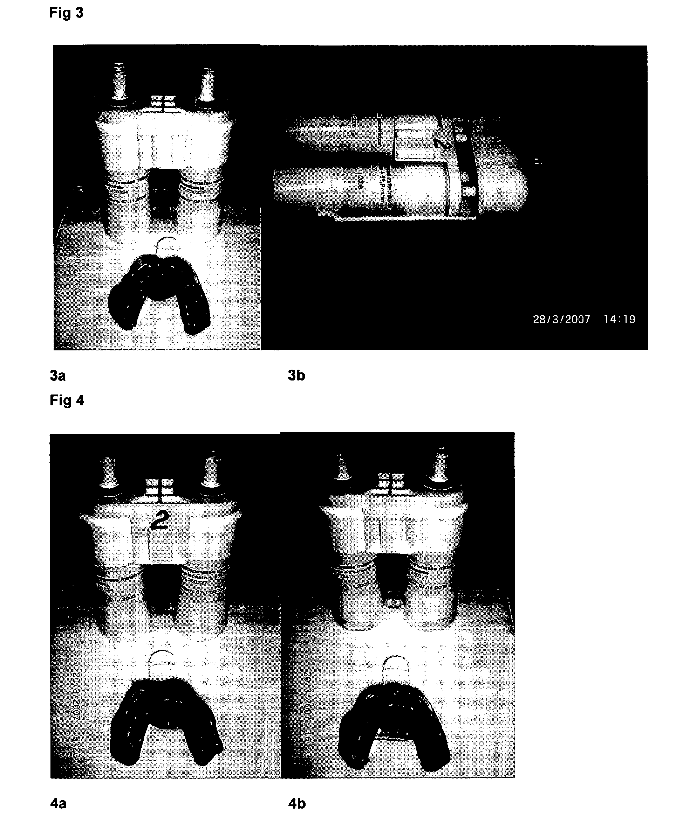

Ein Abformmaterial bestehend aus
a) einer Basispaste eines A-Silikon Abformmaterials in typischer im Markt verwendeter Zusammensetzung, in diesem Fall des Handelsproduktes Flexitime Correct Flow Charge 250327 der Firma Heraeus Kulzer GmbH und
b) einer Katalysatorpaste des Handelsproduktes Flexitime Correct Flow Charge 250334;
wird in 2-Kammer Druckgaspatronen abgefüllt. Das Treibmittel ist in diesem Fall Pentan; zusätzlich werden 5% Pentan als Schaumbildner und internes Treibmittel in der Basispaste eingesetzt (siehe Abbildung 3a). Die Applikation geschieht dabei z.B. durch handelsübliche Applikatoren (Abbildung 3b) unter Verwendung von handelsüblichen statischen Mischern.

Die Förderzeit des Abformmaterials ist gegenüber jener aus einer handbetriebenen Abformpistole, in die eine 50 ml Hartkartusche eingelegt wird, stark reduziert, und die Applikation des Abformmaterials kann aufgrund dessen, dass die Mischdüse nicht durch Pumpbewegungen der Hand hin- und herwackelt, erheblich dosierter und platzierter erfolgen.
Das sich bildende Silikon weist gegenüber dem klassisch aus einer Hartkartusche geförderten Material und mittels statischem Mischer gemischten Handelsware erwartungsgemäß eine Schaumstruktur auf. Die Shore A Härte ist dadurch um ca. 19 Einheiten auf 27 reduziert (Messung 10 min nach Mischbeginn). Es lässt sich visuell verfolgen wie das Abformmaterial bis zum Zeitpunkt der Vergelung sein Volumen kontinuierlich um ca. 10 bis 15 % vergrößert, also den im Rahmen der Aufgabenstellung gewünschten Schaumdruck zeigt. Die Verarbeitungs- und Abbindezeit dieses A-Silikons sind jenen der Handelsware ähnlich. Die Poren im abgebundenen Abformmaterial befinden sich dabei auch in diesem Fall nahezu vollständig innerhalb des ausgehärteten Materials, während an der abgeformten Oberfläche eine nahezu blasenfreie und sehr homogene Oberfläche entsteht.
Ein Silikon ähnlich der vorliegenden Form erscheint aufgrund der hohen Elastizität und Dämpfungseigenschaften auch sehr gut als Mundschutz (Mouth-Gard) z.B. für Sportanwendungen geeignet.

### Beispiel 3

Ein Abformmaterial bestehend aus
a) einer Basispaste eines A-Silikon Abformmaterials in typischer im Markt verwendeter Zusammensetzung, in diesem Fall des Handelsproduktes Flexitime Correct Flow (Charge 250327) der Firma Heraeus Kulzer GmbH und
b) einer Katalysatorpaste des Handelsproduktes Flexitime Correct Flow Charge 250334;
wird in 2-Kammer Druckgaspatronen abgefüllt.

Das Treibmittel ist in diesem Fall Pentan. 2 % Pentan dienen zusätzlich als Schaumbildner und internes Treibmittel in der Katalysatorpaste (siehe Abbildung 4b). Die Applikation geschieht dabei z.B. durch handelsübliche Applikatoren (Abbildung 3b) unter Verwendung von handelsüblichen statischen Mischern.

Die Förderzeit des Abformmaterials ist gegenüber jener aus einer handbetriebenen Abformpistole, in die eine 50 ml Hartkartusche eingelegt wird, stark reduziert und die Applikation des Abformmaterials kann aufgrund dessen, dass die Mischdüse nicht durch Pumpbewegungen der Hand hin- und herwackelt erheblich dosierter und platzierter erfolgen.
Das sich bildende Silikon weist gegenüber dem klassisch aus einer Hartkartusche geförderten Material und mittels statischem Mischer gemischten Handelsware erwartungsgemäß eine Schaumstruktur auf. Das führt zu einer um ca. 17 Einheiten auf 29 reduzierten Shore A Härte. Es lässt sich visuell verfolgen wie das Abformmaterial bis zum Zeitpunkt der Vergelung sein Volumen kontinuierlich um ca. 10 bis 15 % vergrößert, also den im Rahmen der Aufgabenstellung gewünschten Schaumdruck zeigt. Die Verarbeitungs- und Abbindezeit dieses A-Silikons sind jenem der Handelware ähnlich. Die Poren im abgebundenen Abformmaterial befinden sich dabei auch in diesem Fall nahezu vollständig innerhalb des ausgehärteten Materials, während an der abgeformten Oberfläche eine nahezu blasenfreie und sehr homogene Oberfläche entsteht.

## Patentansprüche

1. Schaumbildende, sich selbstragend verfestigende Zusammensetzung zur Abformung biologischer Oberflächen, insbesondere Dentalzusammensetzungen, enthaltend **A** mindestens ein Abformmaterial auf Basis von
| | |
|---|---|
| **i** | Isocyanaten, die mit ein- und mehrfunktionellen Aminen und/oder hydroxylgruppen haltigen Verbindungen zu Urethan oder Harnstoff abreagieren, oder |
| **ii** | A-Silikonen oder |
| **iii** | C-Silikonen oder |
| **iv** | Polyethern oder |
| **v** | alpha-Silanen oder |
| **vi** | Mischungen zweier oder mehrerer Materialien i bis v, sowie |
gegebenenfalls **B**
mindestens ein Treibmittel.

2. Zusammensetzung nach Anspruch 1, enthaltend als Komponente
**A** die Basispaste eines A-Silikon Abformmaterials und die Katalysatorpaste eines A-Silikon Abformmaterials.

3. Zusammensetzung nach Anspruch 1, enthaltend als Komponente
**A** ein Abformmaterial auf Basis von mindestens ein Tri-, Di-,oder Monoalkoxy-alpha-Silan.

4. Zusammensetzung nach Anspruch 1, enthaltend als Komponente
A die Basispaste eines Polyether Abformmaterials und die Katalysatorpaste eines Polyether Abformmaterials.

5. Zusammensetzung nach Anspruch 1, enthaltend als Komponente
A ein Abformmaterial auf Basis von einem alpha-Aminotrimethoxysilan.

6. Verwendung einer Zusammensetzung nach mindestens einem der Ansprüche 1 - 5 zur Herstellung eines Mittels zur Abformung von Oberflächen.

7. Verwendung einer Zusammensetzung nach mindestens einem der Ansprüche 1 - 5 zur Herstellung eines Mittels zur Abformung biologischer Oberflächen.

8. Verwendung einer Zusammensetzung nach mindestens einem der Ansprüche 1 - 5 zur Herstellung von Abformmaterial zur Abformung der Oberflächen von Zähnen, Körperteilen, Haut oder Pflanzenteilen bei Menschen, Tieren oder Pflanzen.

9. Verwendung einer Zusammensetzung nach mindestens einem der Ansprüche 1 - 5 zur Herstellung eines Mittels zur Abformung dentaler Oberflächen.

10. Verwendung einer Zusammensetzung nach mindestens einem der Ansprüche 1-5 zur Herstellung eines Mittels zum Formen von Platzhaltern auf Zahnstümpfen.

11. Verwendung einer Zusammensetzung nach mindestens einem der Ansprüche 1 - 5 zur Herstellung eines Mittels zur Schienung von Zähnen.

12. Verwendung einer Zusammensetzung nach mindestens einem der Ansprüche 1 - 5 zur Herstellung von individuellem Mundschutz im Sportbereich ("mouth gard").

13. Verwendung einer Zusammensetzung nach mindestens einem der Ansprüche 1 - 5 zur Herstellung individueller Abformlöffel.

14. Verwendung einer Zusammensetzung nach mindestens einem der Ansprüche 1 - 5, wobei das Gasvolumen des Schaums < 50% beträgt, zur Herstellung eines Mittels für Korrekturabformungen.

15. Verwendung einer Zusammensetzung nach mindestens einem der Ansprüche 1 - 5 zur Herstellung eines Mittels zur Erweiterung des Sulkus nach Art eines expandierenden Extraktionsfadens unter Verwendung eines treibmittelhaltigen Schaums.

16. Verwendung einer Zusammensetzung nach mindestens einem der vorstehenden Ansprüche zur Herstellung von Abformmaterial zur Abformung von Körperteilen zur Anfertigung von individuell angepassten Hilfsmitteln aus der Gruppe der Schuheinlagen, Orthopädiehilfsmittel, Sitzanpassungen und Hörgeräte.

17. Abformlöffel für eine Zusammensetzung nach mindestens einem der vorstehenden Ansprüche, der
mindestens einen Einlass für gebildeten Schaum,
Mittel (2) zur Abdichtung für die seitlichen Flächen,
und mindestens einen Auslass (1) für überschüssigen Schaum aufweist, derart, dass ein Schaumüberschuss nicht in den Rachenraum gelangt.

18. Abformlöffel nach Anspruch 16, der zusätzlich mit einer stärkeren Abdämmung (3) zum Rachen hin versehen ist.

19. Abformung biologischer Oberflächen aus einem Abformmaterial auf Basis von
**i** Isocyanaten, die mit ein- und mehrfunktionellen Aminen und/oder hydroxylgruppenhaltigen Verbindungen zu Urethan oder Harnstoff abreagieren, oder
**ii** A-Silikonen oder
**iii** C-Silikonen oder
**iv** Polyethern oder
**v** alpha-Silanen oder
**vi** Mischungen zweier oder mehrerer Materialien i bis v,
**dadurch gekennzeichnet, dass** sie einen geschlossenporigen Schaum aufweist.

20. Abformung nach Anspruch 19, **dadurch gekennzeichnet, dass** sie eine Dentalabformung ist.

21. Abformung nach Anspruch 19 oder 20, **dadurch gekennzeichnet, dass** sie selbsttragend ist.

22. Abformung nach einem der Ansprüche 19 bis 21, **dadurch gekennzeichnet, dass** sie elastisch und formstabil ist.
